# EUROPÄISCHE PATENTANMELDUNG

(11) **EP 4 238 798 A2**
(43) Veröffentlichungstag der Anmeldung: **06.09.2023**
(21) Anmeldenummer: 23151250.0
(22) Anmeldetag: 12.01.2023
(51) Int. Cl.: B60K 15/05

(54) **MULTIFUNKTIONSEINHEIT FÜR EINE KLAPPE EINES FAHRZEUGES, KLAPPENANORDNUNG UND EIN VERFAHREN ZUM BETÄTIGEN DER MULTIFUNKTIONSEINHEIT**

(30) Priorität: 13.01.2022 DE 102022100688
(71) Anmelder: Huf Hülsbeck & Fürst GmbH & Co. KG, 42551 Velbert (DE)
(72) Erfinder: Buschmann, Gerd, 42553 Velbert (DE)
(74) Vertreter: Bals & Vogel Patentanwälte PartGmbB

(57) **Zusammenfassung**

Die Erfindung betrifft eine Multifunktionseinheit (100) für eine Klappe (201), insbesondere eine Ladeklappe oder eine Tankklappe, eines Fahrzeuges (200), zum Bereitstellen einer Zuziehhilfe (1) mit einer Verriegelungsfunktion (2) und einer Aufstoßhilfe (3) an der Klappe (201), aufweisend: einen Verriegelungsstempel (10) zum Ziehen, zum Verriegeln und/oder zum Drücken an der Klappe (201), welcher in einer Aufnahme (203) an einem Gehäuse (202) für die Klappe (201) bewegbar anordbar ist, und eine Antriebseinheit (20) zum Antreiben des Verriegelungsstempels (10) zum Ziehen, zum Verriegeln und/oder zum Drücken an der Klappe (201).

## Beschreibung

Die Erfindung betrifft eine Multifunktionseinheit für eine Klappe, insbesondere eine Ladeklappe oder eine Tankklappe, eines Fahrzeuges, vorzugsweise eines Elektrofahrzeuges. Ferner betrifft die Erfindung eine korrespondierende Klappenanordnung mit einer entsprechenden Multifunktionseinheit sowie ein Verfahren zum Betätigen einer entsprechenden Multifunktionseinheit.

Ladeklappen für Ladesteckdosen bei Elektrofahrzeugen sind grundsätzlich bekannt. Die Ladeklappen können bspw. elektrisch angetrieben werden, um die Betätigung der Ladeklappen zu erleichtern. Moderne Fahrzeuge werden zunehmend mit erweiterten Funktionen bei den Ladeklappen ausgestattet, wie z. B. einer Zuziehfunktion und/oder einer Aufstoßfunktion, bspw. für die Fälle einer Vereisung der Klappe. Die Zuziehfunktion kann mithilfe einer Zuziehhilfevorrichtung bereitgestellt werden. Die Aufstoßfunktion kann mithilfe der gleichen Zuziehhilfevorrichtung oder einer weiteren Aufstoßvorrrichtung bereitgestellt werden. Weiterhin sind Verriegelungsvorrichtungen denkbar, die eine Verriegelungsfunktion an den Ladeklappen bereitstellen können. Nachteilig ist dabei, dass unterschiedliche Funktionen mithilfe von unterschiedlichen Vorrichtungen, zumeist mit mehreren Antriebsmotoren ermöglicht werden.

Es ist daher Aufgabe der vorliegenden Erfindung, eine verbesserte Multifunktionseinheit für eine Klappe, insbesondere eine Ladeklappe oder eine Tankklappe, eines Fahrzeuges, vorzugsweise eines Elektrofahrzeuges, bereitzustellen. Insbesondere ist es Aufgabe der vorliegenden Erfindung, eine solche Multifunktionseinheit bereitzustellen, die eine vorteilhafte, insbesondere erweiterte, Funktionalität aufweist, die zum Bereitstellen einer Zuziehhilfe mit einer vorteilhaften Verriegelungsfunktion sowie zum Bereitstellen einer Aufstoßhilfe an der Klappe ausgeführt ist, die hierzu nur einen Antriebsmotor benötigt, die einfach aufgebaut ist, die einen kompakten Bauraum aufweist, die leicht zu montieren ist und die zuverlässig im Betrieb ist.

Die erfindungsgemäße Aufgabe wird gelöst durch eine Multifunktionseinheit für eine Klappe, insbesondere eine Ladeklappe oder eine Tankklappe, eines Fahrzeuges, vorzugsweise eines Elektrofahrzeuges, zum Bereitstellen einer Zuziehhilfe mit einer vorteilhaften Verriegelungsfunktion sowie zum Bereitstellen einer Aufstoßhilfe an der Klappe nach dem unabhängigen Vorrichtungsanspruch. Ferner betrifft die Erfindung eine korrespondierende Klappenanordnung mit einer entsprechenden Multifunktionseinheit nach dem nebengeordneten Vorrichtungsanspruch sowie ein Verfahren zum Betätigen einer entsprechenden Multifunktionseinheit nach dem unabhängigen Verfahrensanspruch. Dabei gelten Merkmale und Details, die im Zusammenhang mit den unterschiedlichen Ausführungsformen und/oder Aspekten der Erfindung beschrieben sind, selbstverständlich auch im Zusammenhang mit den anderen Ausführungsformen und/oder Aspekten und jeweils umgekehrt, sodass bezüglich der Offenbarung zu den einzelnen Ausführungsformen und/oder Aspekten stets wechselseitig Bezug genommen wird bzw. werden kann.

Gemäß dem ersten Aspekt stellt die Erfindung bereit: Eine Multifunktionseinheit für eine Klappe, insbesondere eine Ladeklappe oder eine Tankklappe, eines Fahrzeuges, zum Bereitstellen einer Zuziehhilfe mit einer Verriegelungsfunktion sowie einer Aufstoßhilfe (auch genannt Eisbrechfunktion) an der Klappe,
aufweisend:
- einen, insbesondere schwenkbar (bzw. kippbar) und/oder längsverschieblich antreibbaren, Verriegelungsstempel (nach Bedarf) zum Ziehen, zum Verriegeln und/oder (nach Bedarf) zum Drücken an der Klappe, welcher in einer Aufnahme an einem Gehäuse für die Klappe bewegbar anordbar ist, und
- eine, insbesondere ausschließlich eine für alle Funktionen der Multifunktionseinheit gemeinsame, Antriebseinheit, die vorzugsweise mit nur einem Antriebsmotor, bspw. nur einem Elektromotor, ausgestaltet sein kann, zum Antreiben des Verriegelungsstempels, sodass der Verriegelungsstempel zum Ziehen, zum Verriegeln und/oder zum Drücken an der Klappe dienen kann.

Der Verriegelungsstempel kann ebenfalls als ein Zug-/Druck-/Verriegelungsstempel bezeichnet werden.

Der Erfindungsgedanke liegt dabei darin, mit nur einer Antriebseinheit, insbesondere mit nur einem Elektromotor, im Rahmen einer einzigen Multifunktionseinheit (nach Bedarf) eine Zuziehhilfe mit einer vorteilhaften Verriegelungsfunktion sowie (nach Bedarf) eine Aufstoßhilfe bzw. eine Eisbrechfunktion an der Klappe zu schaffen. Die Antriebseinheit und der Verriegelungsstempel sind dabei derart ausgeführt, dass der Verriegelungsstempel sowohl in eine Zuziehstellung mit einer Verriegelungsfunktion als auch in eine Entriegelungsstellung mit einer Aufstoßfunktion mithilfe nur einer Antriebseinheit, insbesondere mit nur einem Elektromotor, angetrieben wird. Beim Überführen des Verriegelungsstempels in Verriegelungsstellung wird die Klappe nicht nur zugezogen, sondern weiterhin verriegelt. Beim Überführen des Verriegelungsstempels in die Entriegelungsstellung wird die Klappe zunächst entriegelt und weiterhin aufgestoßen. Die Antriebseinheit weist dabei vorzugsweise nur einen Elektromotor. Die Klappe kann dabei mit einem separaten Elektromotor betätigt werden, bspw. schwenkbar angetrieben werden. Der Elektromotor bei der erfindungsgemäßen Antriebseinheit kann dabei unabhängig von dem Elektromotor bei der Betätigungseinheit der Klappe ausgeführt sein. Der Elektromotor der erfindungsgemäßen Antriebseinheit kann dabei beabstandet zu dem Elektromotor der Betätigungseinheit der Klappe angeordnet sein. Außerdem kann die Multifunktionseinheit einfach aufgebaut werden, einen kompakten Bauraum aufweisen, leicht zu montieren sein und zuverlässig im Betrieb sein.

Ferner kann bei einer Multifunktionseinheit vorgesehen sein, dass der Verriegelungsstempel längsverschieblich und/oder schwenkbar (bzw. kippbar) durch die Antriebseinheit antreibbar ist. Dadurch kann ermöglicht werden, dass der Verriegelungsstempel beim Einwirken auf die Klappe zwei unterschiedliche Bewegungsarten durchführen kann, insbesondere bei einer Führung durch ein und dieselbe Antriebskulisse. Auf diese Weise kann durch den Verriegelungsstempel eine Zuziehhilfe bereitgestellt werden, die mit einer vorteilhaften Verriegelungsfunktion kombiniert werden kann. Zugleich kann auf diese Weise eine Aufstoßhilfe bzw. eine Eisbrechfunktion durch den Verriegelungsstempel bereitgestellt werden.

Weiterhin kann bei einer Multifunktionseinheit vorgesehen sein, dass der Verriegelungsstempel zwischen einer Entriegelungsstellung, einer Schließstellung und einer Verriegelungsstellung gegenüber der Klappe bewegbar angetrieben wird. Mithilfe der Schließstellung kann eine vorteilhafte erweiterte Funktionalität durch den Verriegelungsstempel ermöglicht werden. Vorzugsweise kann über die Schließstellung eine kombinierte Bewegung, umfassend vorzugweise längsverschiebliche und/oder schwenkbare Bewegung, des Verriegelungsstempels ermöglicht werden, die nach Bedarf zum Ziehen und weiterhin zum Verriegeln der Klappe und/oder nach Bedarf zum Entriegeln und weiterhin zum Drücken an bzw. zum Aufstoßen der Klappe dienen kann. In die Schließstellung kann der Verriegelungsstempel einfachheitshalber durch die Klappe selbst überführt werden, bspw. wenn die Klappe durch einen unabhängigen Antriebsmotor einer separaten Betätigungseinheit abgesenkt wird. Zwischen der Schließstellung und der Verriegelungsstellung sowie zwischen der Verriegelungsstellung und der Entriegelungsstellung kann der Verriegelungsstempel durch die Antriebseinheit, insbesondere mit nur einem Elektromotor, angetrieben werden.

Des Weiteren kann bei einer Multifunktionseinheit vorgesehen sein, dass der Verriegelungsstempel eine Antriebskulisse aufweist. Die Antriebskulisse kann dabei mit einem korrespondierenden Antriebsnocken der Antriebseinheit zusammenwirken, um den Verriegelungsstempel zwischen der Schließstellung und der Verriegelungsstellung und umgekehrt zwischen der Verriegelungsstellung und der Entriegelungsstellung anzutreiben. Mithilfe der Antriebskulisse kann einfach und gezielt eine gewünschte, insbesondere kombinierte Bewegung, umfassend vorzugweise längsverschiebliche und/oder schwenkbare Bewegung, zum Ziehen und weiterhin zum Verriegeln und/oder umgekehrt zum Entriegeln und weiterhin zum Drücken an der Klappe ermöglicht werden.

Zudem kann bei einer Multifunktionseinheit vorgesehen sein, dass der Verriegelungsstempel lose, insbesondere ohne Lager, in der Aufnahme am Gehäuse aufgenommen bzw. eingelegt ist. In der Aufnahme hat der Verriegelungsstempel eine Bewegungsfreiheit zum Vollführen einer kombinierten Bewegung, umfassend vorzugweise längsverschiebliche und/oder schwenkbare Bewegung, wenn der Verriegelungsstempel durch die Antriebseinheit angetrieben wird. Dabei kann der Verriegelungsstempel an den Seitenflächen der Aufnahme zur Auflage kommen. An den Seitenflächen der Aufnahme sind jedoch keine zusätzlichen Lager für den Verriegelungsstempel vorgesehen. Die Aufnahme bildet dabei das einzige Lager gegenüber dem Gehäuse der Klappenanordnung. Die Bewegung des Verriegelungsstempels wird durch die Antriebseinheit erzeugt. Die Aufnahme dient dabei nur zum Teil zum Begrenzen und/oder zum Mitgestalten der Bewegung des Verriegelungsstempels.

Außerdem kann bei einer Multifunktionseinheit vorgesehen sein, dass die Antriebskulisse eine Parkbucht für einen Antriebsnocken der Antriebseinheit, insbesondere in einer Entriegelungsstellung des Verriegelungsstempels, aufweist. Die Parkbucht kann dabei dazu dienen, die Entriegelungsstellung des Verriegelungsstempels zu stabilisieren.

Ferner kann bei einer Multifunktionseinheit vorgesehen sein, dass die Antriebskulisse eine im Wesentlichen viereckige Form, vorzugsweise mit abgerundeten Ecken, aufweist. Auf diese Weise kann eine fließende, ruckfreie Bewegung, vorzugsweise mit zwei unterschiedlichen Bewegungsarten, umfassend bspw. eine längsverschiebliche und/oder schwenkbare Bewegung, des Verriegelungsstempels ermöglicht werden.

Weiterhin kann bei einer Multifunktionseinheit vorgesehen sein, dass die Antriebseinheit einen Rotationsantrieb aufweist. Auf diese Weise kann eine einfache und kostengünstige Antriebseinheit bereitgestellt werden.

Vorteilhafterweise kann die Antriebseinheit einen, insbesondere ausschließlich einen, Antriebsmotor, bspw. in der Form eines Elektromotors, aufweisen. Auf diese Weise kann eine kompakte, kostengünstige und einfach montierbare Antriebseinheit bereitgestellt werden.

Vorzugsweise kann die Antriebseinheit ein Schneckengetriebe aufweisen. Ein Schneckengetriebe ist ein einfaches, kostengünstiges sowie einfach montierbares Getriebe. Mithilfe eines solchen Getriebes können relativ hohe Übersetzungen erreicht werden. Zudem ist ein solches Getriebe selbsthemmend. Auf diese Weise können die Endstellung des Verriegelungsstempels stabil gehalten werden. Dabei kann die Antriebseinheit eine schraubenförmige Schneckenwelle und ein Schneckenrad aufweisen.

Des Weiteren kann die Antriebseinheit einen Antriebsnocken aufweisen. Durch den Antriebsnocken kann eine Wirkverbindung zu einer Antriebskulisse am Verriegelungsstempel bereitgestellt werden. Der Antriebsnocken kann dabei drehfest mit dem Schneckenrad verbunden sein und mit dem Schneckenrad auf einer Kreisbahn um die Drehachse des Schneckenrades rotieren. Der Antriebsnocken ist dabei mit einem Abstand zu der Drehachse des Schneckenrades an diesem befestigt.

Vorteilhafterweise kann der Antriebsnocken zum, insbesondere längsverschieblichen und/oder schwenkbaren, Antreiben des Verriegelungsstempels ausgeführt sein. Hierzu kann der Antriebsnocken mit einer Antriebskulisse am Verriegelungsstempel in einer mechanischen Wirkverbindung stehen. Auf diese Weise kann eine einfache Ausgestaltung der Antriebseinheit und des Verriegelungsstempels ermöglicht werden, die eine gezielt gewählte Bewegung, insbesondere eine kombinierte Bewegung, umfassend vorzugweise längsverschiebliche und/oder schwenkbare Bewegung, zum Ziehen und weiterhin zum Verriegeln und/oder umgekehrt zum Entriegeln und weiterhin zum Drücken an der Klappe des Verriegelungsstempels ermöglicht werden.

Zudem kann bei einer Multifunktionseinheit eine Sperrklinke vorgesehen sein, welche drehbar am Gehäuse lagerbar ist, die dazu ausgeführt ist, die Antriebseinheit, insbesondere den Antriebsnocken, beim, insbesondere längsverschieblichen und/oder schwenkbaren, Antreiben des Verriegelungsstempels zu unterstützen. Die Sperrklinke kann bspw. federelastisch am Gehäuse abgestützt sein. Die Sperrklinke kann vorteilhafterweise zum Mitgestalten der Bewegung des Verriegelungsstempels dienen. Vorzugsweise kann die Sperrklinke dazu ausgeführt sein, den Verriegelungsstempel in der Verriegelungsstellung zu halten, insbesondere form- und/oder kraftschlüssig zu halten.

Außerdem kann bei einer Multifunktionseinheit eine Notentriegelungseinheit für den Verriegelungsstempel vorgesehen sein, um den Verriegelungsstempel zum Entriegeln der Klappe, bspw. durch ein manuelles Ziehen an einem Notentriegelungselement, anzutreiben. Die Notentriegelungseinheit kann dazu dienen, den Verriegelungsstempel zum Entriegeln der Klappe anzutreiben, bspw. wenn die Elektronik versagt und/oder wenn keine elektrische Energie für die Antriebseinheit zur Verfügung steht. Die Notentriegelungseinheit kann dabei eine mechanische Rückfallebene zum Entriegeln der Klappe bilden.

Ferner kann bei einer Multifunktionseinheit vorgesehen sein, dass der Verriegelungsstempel eine Sperrnase (kann ebenfalls als ein Zuziehhaken bezeichnet werden) aufweist, die dazu ausgeführt ist, mit einem komplementären Gegenrastelement an der Klappe zusammenzuwirken, um die Klappe zuzuziehen und/oder zu verriegeln. Auf diese Weise kann eine konstruktiv einfache sowie effektive Zuziehhilfe mit einer vorteilhaften Verriegelungsfunktion ermöglicht werden.

Weiterhin kann bei einer Multifunktionseinheit vorgesehen sein, dass der Verriegelungsstempel eine Konturschulter aufweist, die dazu ausgeführt ist, mit einem komplementären Konturnocken am Gehäuse zusammenzuwirken, um den Verriegelungsstempel bei einer Bewegung zum Ziehen und/oder zum Drücken an der Klappe zu führen. Zudem kann die Konturschulter dazu dienen, den Verriegelungsstempel aus einer Zwischenstellung, wie z. B. einer Schließstellung, in eine Verriegelungsstellung oder in eine Entriegelungsstellung zu führen. Zudem kann die Konturschulter dazu dienen, den Verriegelungsstempel in der Entriegelungsstellung auf Abstand zur Klappe zu halten, um ein Öffnen und/oder Schließen der Klappe bei einer normalen Betätigung der Klappe zu ermöglichen. Der komplementäre Konturnocken kann dabei an einer Öffnung der Aufnahme im Gehäuse angeordnet sein.

Des Weiteren kann bei einer Multifunktionseinheit vorgesehen sein, dass der Verriegelungsstempel federelastisch in eine Verriegelungsstellung gegenüber der Klappe beaufschlagt ist, insbesondere durch einen federelastisch vorgespannten Druckstift. Auf diese Weise kann im Rahmen einer Zuziehhilfe einfach und ohne großen konstruktiven Aufwand eine Verriegelungsfunktion bereitgestellt werden.

Vorteilhafterweise kann bei einer Multifunktionseinheit mindestens ein Sensorelement, insbesondere in Form eines Schalters, vorgesehen sein, um eine Verriegelungsstellung oder eine Entriegelungsstellung des Verriegelungsstempels gegenüber der Klappe zu detektieren. Nach einem weiteren Vorteil kann bei einer Multifunktionseinheit mindestens ein Sensorelement, insbesondere in Form eines Schalters, vorgesehen sein, um eine Verriegelungsstellung des Verriegelungsstempels gegenüber der Klappe zu detektieren. Auf diese Weise kann die Funktionalität der Multifunktionseinheit überwacht werden und ein zuverlässiges Bereitstellen der Funktionen der Multifunktionseinheit sichergestellt werden.

Einfachheitshalber kann der Verriegelungsstempel dazu ausgeführt sein, durch die Klappe aus einer Entriegelungsstellung in eine Schließstellung überführt zu werden. Auf diese Weise kann die Multifunktionseinheit den Umstand nutzen, dass die Klappe durch einen eigenen Antrieb betätigt wird, um die anfängliche Bewegung des Verriegelungsstempels aus der Entriegelungsstellung in die Schließstellung einzuleiten. Nach dem Hinterhaken des Verriegelungsstempels an der Kappe kann der Verriegelungsstempel schließlich die Kappe zuziehen und weiterhin verriegeln.

Vorteilhafterweise kann die Antriebseinheit dazu ausgeführt sein, durch eine Drehung eines Rotationsantriebes in eine erste Richtung den Verriegelungsstempel aus einer Schließstellung in eine Verriegelungsstellung zu überführen. Ferner kann es von Vorteil sein, dass die Antriebseinheit dazu ausgeführt sein kann, durch eine Drehung eines Rotationsantriebes in eine zweite Richtung den Verriegelungsstempel aus einer Verriegelungsstellung in eine Entriegelungsstellung zu überführen. Auf diese Weise kann die Antriebseinheit den Verriegelungsstempel mit wenig elektrischer Leistung, zuverlässig und effektiv antreiben.

Gemäß dem zweiten Aspekt stellt die Erfindung bereit: Eine Klappenanordnung mit:
- Einer Klappe, insbesondere eine Ladeklappe oder eine Tankklappe, zum Verschließen eines funktionswesentlichen Elementes, insbesondere einer Ladesteckdose oder eines Kraftstoffeinfüllrohres, eines Fahrzeuges, die bewegbar, insbesondere schwenkbar, an einem Gehäuse gelagert ist,
- dem Gehäuse zum Lagern der Klappe,
- einer Betätigungseinheit zum Betätigen der Klappe, und
- einer Multifunktionseinheit zum Bereitstellen einer Zuziehhilfe mit einer Verriegelungsfunktion sowie einer Aufstoßhilfe bzw. einer Eisbrechfunktion an der Klappe, die wie oben beschrieben ausgeführt sein kann.

Die Vorteile, die oben im Zusammenhang mit der Multifunktionseinheit beschrieben wurden, können ebenfalls im Zusammenhang mit der erfindungsgemäßen Klappenanordnung erreicht werden. Auf diese Vorteile wird vorliegend vollumfänglich Bezug genommen.

Gemäß dem zweiten Aspekt stellt die Erfindung bereit: Ein Verfahren zum Betätigen einer Multifunktionseinheit, die, wie oben beschrieben, ausgeführt sein kann, aufweisend folgende Schritte:
- Schließen der Klappe, um den Verriegelungsstempel aus einer Entriegelungsstellung in eine Schließstellung zu überführen,
- Betätigen der Antriebseinheit in eine erste Richtung, um den Verriegelungsstempel aus einer Schließstellung in eine Verriegelungsstellung zu überführen,
- Betätigen der Antriebseinheit in eine zweite Richtung, um den Verriegelungsstempel aus einer Verriegelungsstellung in eine Entriegelungsstellung zu überführen.

Die Vorteile, die oben im Zusammenhang mit der Multifunktionseinheit beschrieben wurden, können ebenfalls im Zusammenhang mit dem erfindungsgemäßen Verfahren erreicht werden. Auf diese Vorteile wird vorliegend vollumfänglich Bezug genommen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Ansicht einer Klappenanordnung mit einer Multifunktionseinheit im Rahmen der vorliegenden Erfindung,
- Fig. 2: eine schematische Schnittdarstellung einer Multifunktionseinheit im Rahmen der vorliegenden Erfindung,
- Fig. 3: eine schematische Schnittdarstellung einer Multifunktionseinheit mit einem Verriegelungsstempel in einer Entriegelungsstellung,
- Fig. 4: eine schematische Schnittdarstellung einer Multifunktionseinheit mit einem Verriegelungsstempel in einer Schließstellung,
- Fig. 5: eine schematische Schnittdarstellung einer Multifunktionseinheit mit einem Verriegelungsstempel in einer Verriegelungsstellung, und
- Fig. 6: eine schematische Schnittdarstellung einer Multifunktionseinheit mit einem Verriegelungsstempel zwischen einer Schließstellung und einer Entriegelungsstellung.

In den nachfolgenden Figuren werden für die gleichen technischen Merkmale auch von unterschiedlichen Ausführungsbeispielen die identischen Bezugszeichen verwendet. In der Regel werden die Bezugszeichen von den gleichen Ausführungsbeispielen nur einmal beschrieben.

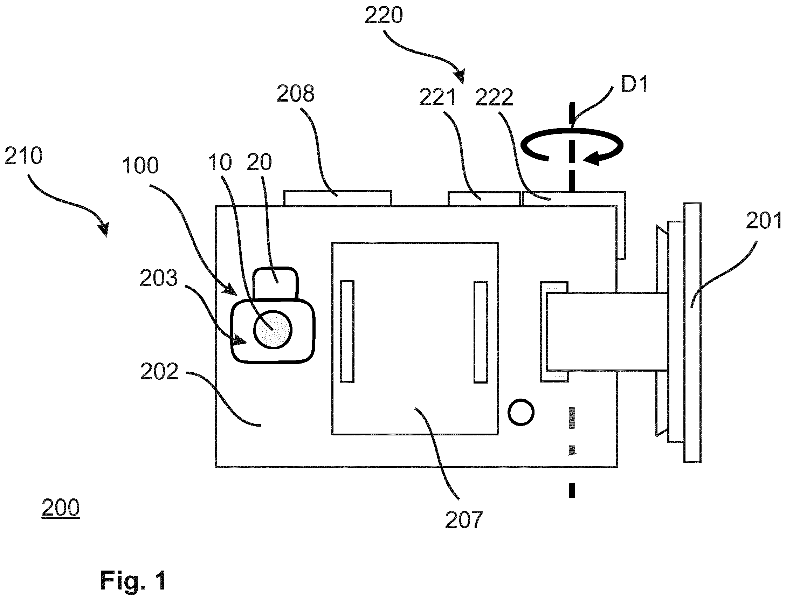

Die Figur 1 zeigt schematisch eine Klappenanordnung 210 mit einer Multifunktionseinheit 100 im Rahmen der vorliegenden Erfindung. Die Klappenanordnung 210 weist eine Klappe 201 für ein funktionswesentliches Element 207, wie z. B. eine Ladesteckdose oder ein Kraftstoffeinfüllrohr, eines Fahrzeuges 200 auf. Ein Fahrzeug als Ganzes ist in den Figuren lediglich aus Einfachheitsgründen nicht dargestellt.

Die Multifunktionseinheit 100 im Rahmen der vorliegenden Erfindung kann für eine Klappenanordnung 210 eines Elektrofahrzeuges genutzt werden. Die Klappe 201 kann dabei bspw. in Form einer Ladeklappe für eine Ladesteckdose des Elektrofahrzeuges ausgeführt sein. Die Ladesteckdose kann dazu genutzt werden, um eine Traktionsbatterie und/oder mindestens eine Bordnetzbatterie des Elektrofahrzeuges aufzuladen.

Die Multifunktionseinheit 100 im Rahmen der vorliegenden Erfindung kann ebenfalls für eine Klappenanordnung 210 eines treibstoffangetriebenen Fahrzeuges oder eines Hybridfahrzeuges genutzt werden. Die Klappe 201 kann dabei bspw. in Form einer Tankklappe für ein Kraftstoffeinfüllrohr ausgeführt sein.

Die Klappe 201 kann bspw. mithilfe einer Betätigungseinheit 220 elektrisch angetrieben werden. Dabei kann die Betätigungseinheit 220 einen Antriebsmotor 221, bspw. in der Form eines Elektromotors, und ein Getriebe 222, bspw. ein Rotationsgetriebe, aufweisen. Die Klappe 201 kann bspw. drehbar um eine Drehachse D1 angetrieben werden. Die Klappenanordnung 210 wird mit einer Multifunktionseinheit 100 im Rahmen der Erfindung ausgestattet, um die Funktionsweise der Klappe 201 zu verbessern und/oder zu erweitern, und um den Betrieb der Klappe 201 mit einer erhöhten Sicherheit auszugestalten, und um den Kundenkomfort beim Bedienen der Klappe 201 zu erhöhen.

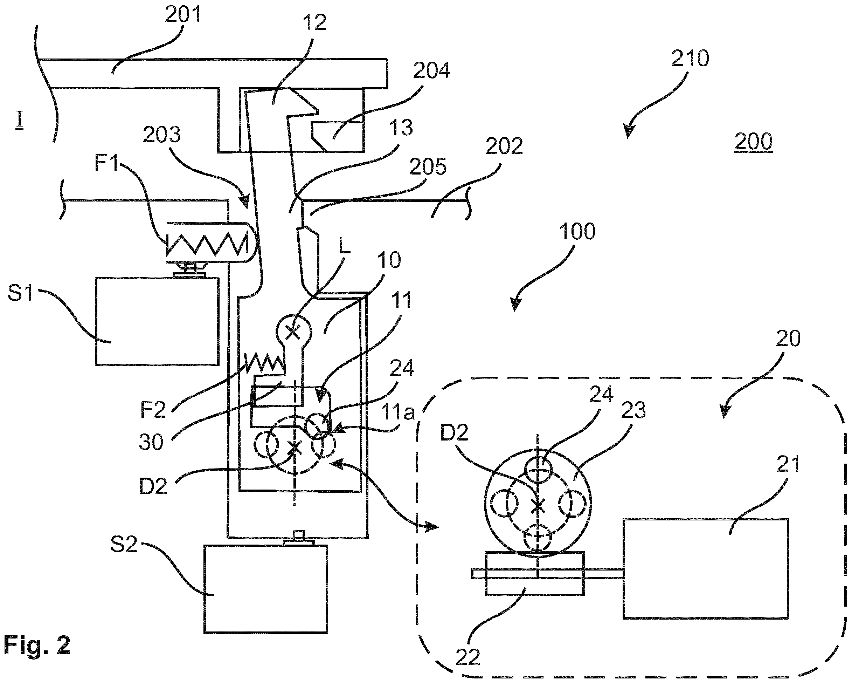

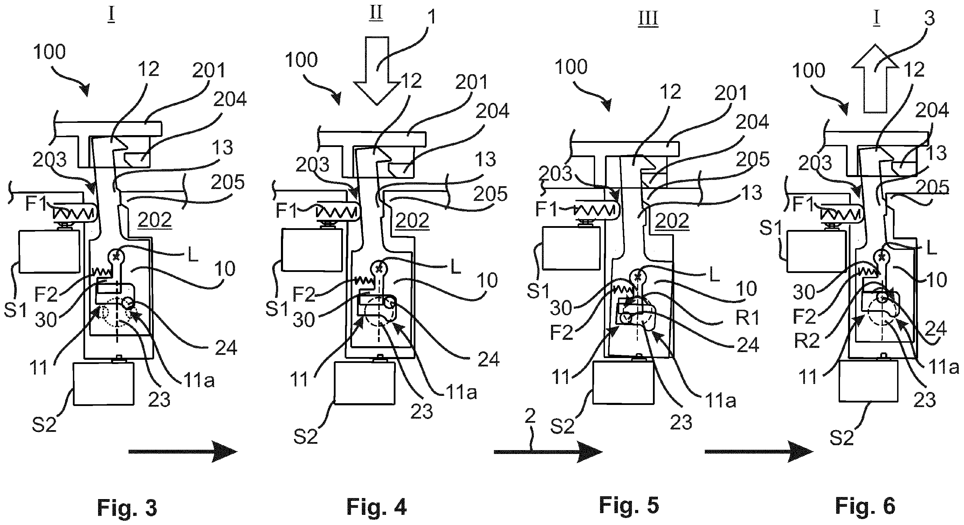

Die Figur 2 zeigt schematisch eine Multifunktionseinheit 100 im Rahmen der Erfindung. Die Multifunktionseinheit 100 ist (nach Bedarf) zum Bereitstellen einer Zuziehhilfe 1 (vgl. Fig. 4) mit einer vorteilhaften Verriegelungsfunktion 2 (vgl. Fig. 5) sowie (nach Bedarf) zum Bereitstellen einer Aufstoßhilfe 3 (vgl. Fig. 6) an der Klappe 201 ausgeführt. Die Zuziehhilfe 1 (vgl. Fig. 4) mit einer vorteilhaften Verriegelungsfunktion 2 (vgl. Fig. 5) und die Aufstoßhilfe 3 (vgl. Fig. 6) können dabei abwechselnd bereitgestellt werden.

Die Multifunktionseinheit 100 weist folgende Elemente auf:
- Einen, insbesondere schwenkbar bzw. kippbar sowie längsverschieblich antreibbaren, Verriegelungsstempel 10 (nach Bedarf) zum Ziehen und weiterhin zum Verriegeln und/oder (nach Bedarf) zum Drücken an der Klappe 201, welcher in einer Aufnahme 203 an einem Gehäuse 202 für die Klappe 201 bewegbar angeordnet werden kann, und
- eine, insbesondere ausschließlich eine für alle Funktionen der Multifunktionseinheit 100 gemeinsame, Antriebseinheit 20, die vorzugsweise mit nur einem Antriebsmotor 21, bspw. nur einem Elektromotor, ausgestaltet sein kann, zum Antreiben des Verriegelungsstempels 10, wodurch der Verriegelungsstempel 10 nach Bedarf zum Ziehen und weiterhin zum Verriegeln und/oder nach Bedarf zum Drücken an bzw. zu Aufstoßen der Klappe 201 dienen kann.

Der Verriegelungsstempel 10 kann ebenfalls als ein Zug-/Druck-/Verriegelungsstempel bezeichnet werden.

Die erfindungsgemäße Klappenanordnung 210 kann vorteilhafterweise eine Steuereinheit 208 aufweisen. Die Steuereinheit 208 kann sowohl die Betätigungseinheit 220 als auch die Antriebseinheit 20 ansteuern. Die Steuereinheit 208 kann somit das Betätigen der Klappe 201 durch die Betätigungseinheit 220 ansteuern, wodurch die Klappe 201 das funktionswesentliche Element 207 abdecken oder freigeben kann. Zudem kann die Steuereinheit 208 das Antreiben des Verriegelungsstempels 10 durch die Antriebseinheit 20 ansteuern, wodurch der Verriegelungsstempel 10 die Klappe 201 zuziehen und verriegeln oder entriegeln und aufdrücken kann.

Die Erfindung stellt eine Multifunktionseinheit 100 mit nur einer Antriebseinheit 20, insbesondere mit nur einem Antriebsmotor 21, vorzugsweise mit nur einem Elektromotor, bereit, um eine Zuziehhilfe 1 (vgl. Fig. 4) mit einer vorteilhaften Verriegelungsfunktion 2 (vgl. Fig. 5) sowie eine Aufstoßhilfe 3 bzw. eine Eisbrechfunktion (vgl. Fig. 6) an der Klappe 201 zu ermöglichen.

Die Antriebseinheit 20 und der Verriegelungsstempel 10 sind vorzugsweise derart ausgeführt, dass der Verriegelungsstempel 10 sowohl in eine Verriegelungsstellung III (vgl. Fig. 5) als auch in eine Entriegelungsstellung I (vgl. Fig. 4) mithilfe nur einer Antriebseinheit 20, insbesondere mit nur einem Elektromotor, angetrieben wird.

Beim Überführen (s. Fig. 3 bis 5) des Verriegelungsstempels 10 in die Verriegelungsstellung III (vgl. Fig. 5) wird die Klappe 201 nicht nur zugezogen (vgl. den Pfeil nach unten in der Fig. 4), sondern weiterhin verriegelt (vgl. den Pfeil nach rechts vor der Fig. 5).

Beim Überführen (s. Fig. 5 bis 6) des Verriegelungsstempels 10 in Entriegelungsstellung I (vgl. Fig. 6) wird die Klappe 201 zunächst entriegelt und weiterhin aufgestoßen (vgl. den Pfeil nach oben in der Fig. 6).

Die Antriebseinheit 20 weist dabei vorzugsweise nur einen Antriebsmotor 21 auf. Die Klappe 201 wird mit einem separaten Antriebsmotor 221 betätigt. Der Antriebsmotor 21 bei der erfindungsgemäßen Antriebseinheit 20 kann vorzugsweise unabhängig von dem Elektromotor 221 bei der Betätigungseinheit 220 der Klappe 201 ausgeführt sein. Die Klappenanordnung 210 kann somit insgesamt mit zwei Antriebsmotoren 21, 221 ausgeführt sein.

Wie die Figuren 2 bis 6 verdeutlichen, kann der Verriegelungsstempel 10 längsverschieblich und/oder schwenkbar bzw. kippbar durch die Antriebseinheit 20 angetrieben werden. Somit kann der Verriegelungsstempel 10 beim Einwirken auf die Klappe 201 zwei unterschiedliche Bewegungsarten, nämlich Schwenken bzw. Kippen sowie Hoch- und Runterfahren, durchführen. Auf diese Weise kann durch den Verriegelungsstempel 10 eine Zuziehhilfe 1 kombiniert mit der vorteilhaften Verriegelungsfunktion 2 bereitgestellt werden. Zugleich kann auf diese Weise eine Aufstoßhilfe bzw. eine Eisbrechfunktion durch den Verriegelungsstempel 10 bereitgestellt werden.

Wie die Figuren 2 bis 6 weiterhin verdeutlichen, kann der Verriegelungsstempel 10 zwischen einer Entriegelungsstellung I (vgl. Fig. 4), einer Schließstellung II (vgl. Fig. 5) und einer Verriegelungsstellung III (vgl. Fig. 6) gegenüber der Klappe 201 bewegbar angetrieben werden.

Wie es aus den Figuren 2 bis 6 ersichtlich ist, kann der Verriegelungsstempel 10 mit einer Antriebskulisse 11 ausgeführt sein. Die Antriebskulisse 11 kann dabei mit einem korrespondierenden Antriebsnocken 24 der Antriebseinheit 20 zusammenwirken, um den Verriegelungsstempel 10 zwischen der Schließstellung II und der Verriegelungsstellung III und umgekehrt zwischen der Verriegelungsstellung III und der Entriegelungsstellung I anzutreiben.

Zudem ist es aus den Figuren 2 bis 6 ersichtlich, dass der Verriegelungsstempel 10 lose, insbesondere ohne Lager, in der Aufnahme 203 am Gehäuse 202 aufgenommen bzw. eingelegt werden kann. In der Aufnahme 203 hat der Verriegelungsstempel 10 eine Bewegungsfreiheit zum Schwenken bzw. Kippen sowie Hoch- und Runterfahren. Dabei kann der Verriegelungsstempel 10 an den Seitenflächen der Aufnahme 203 zur Auflage kommen. An den Seitenflächen der Aufnahme 203 sind jedoch keine festen Lager für den Verriegelungsstempel 10 vorgesehen. Die Aufnahme 203 bildet dabei das einzige Lager gegenüber dem Gehäuse 202 der Klappenanordnung 210. Die Aufnahme 203 dient dabei nur zum Teil zum Begrenzen und/oder zum Mitgestalten der Bewegung des Verriegelungsstempels 10. Die Bewegung des Verriegelungsstempels 10 wird durch die Antriebseinheit 20 erzeugt.

Außerdem zeigen die Figuren 2 bis 6, dass die Antriebskulisse 11 eine Parkbucht 11a für den Antriebsnocken 24 der Antriebseinheit 20 aufweisen kann (s. die Entriegelungsstellung I des Verriegelungsstempels 10 in der Figur 4). Die Parkbucht 11a kann dabei dazu dienen, die Entriegelungsstellung I des Verriegelungsstempels 10 zu stabilisieren.

Ferner zeigen die Figuren 2 bis 6, dass die Antriebskulisse 11 eine im Wesentlichen viereckige Form, vorzugsweise mit abgerundeten Ecken, aufweisen kann.

Aus der Figur 2 ist weiterhin ersichtlich, dass die Antriebseinheit 20 einen Rotationsantrieb aufweisen kann, bspw. in Form eines Schneckengetriebes 22, 23. Dabei kann die Antriebseinheit 20 eine schraubenförmige Schneckenwelle 22 und ein Schneckenrad 23 aufweisen. An dem Schneckenrad 23, vorzugsweise beabstandet zu der Drehachse D2 des Schneckenrades 23, kann ein Antriebsnocken 24 drehfest befestigt sein. Durch den Antriebsnocken 24 kann die Wirkverbindung zu der Antriebskulisse 11 am Verriegelungsstempel 10 hergestellt werden. Der Antriebsnocken 24 kann somit auf einer Kreisbahn mit dem Schneckenrad 23 rotieren.

Zudem zeigen die Figuren 2 bis 6, dass bei der Multifunktionseinheit 100 eine Sperrklinke 30 vorgesehen sein kann, welche drehbar am Gehäuse 202 gelagert werden kann (vgl. das angedeutete Lager L in den Fig. 2 bis 6). Die Speerklinke 30 kann dazu ausgeführt sein, die Antriebseinheit 20, insbesondere den Antriebsnocken 24, beim, insbesondere längsverschieblichen und/oder schwenkbaren bzw. kippbaren, Antreiben des Verriegelungsstempels 10 zu unterstützen. Die Sperrklinke 30 kann bspw. mithilfe einer Feder F2 am Gehäuse 202 abgestützt sein.

Außerdem deutet die Figur 2 schematisch an, dass bei der Multifunktionseinheit 100 eine Notentriegelungseinheit 40 für den Verriegelungsstempel 10 vorgesehen sein kann, um den Verriegelungsstempel 10 zum Entriegeln der Klappe 201, bspw. durch ein manuelles Ziehen an einem Notentriegelungselement 41, anzutreiben. Die Notentriegelungseinheit 40 kann dazu dienen, den Verriegelungsstempel 10 zum Entriegeln der Klappe 201 aus der Verriegelungsstellung III auszulenken, bspw. wenn die Elektronik versagt und/oder wenn keine elektrische Energie für die Antriebseinheit 20 zur Verfügung steht. Die Notentriegelungseinheit 40 kann somit eine mechanische Rückfallebene zum Entriegeln der Klappe 201 in einem Notfall bilden.

Ferner zeigen die Figuren 2 bis 6, dass der Verriegelungsstempel 10 eine Sperrnase 12 bzw. einen Zuziehhaken aufweisen kann, die bzw. der dazu ausgeführt sein kann, mit einem komplementären Gegenrastelement 204 an der Klappe 201 zusammenzuwirken, um die Klappe 201 zuzuziehen und/oder zu verriegeln.

Weiterhin zeigen die Figuren 2 bis 6, dass der Verriegelungsstempel 10 eine Konturschulter 13 aufweisen kann, die dazu ausgeführt sein kann, mit einem komplementären Konturnocken 205 am Gehäuse 202 zusammenzuwirken, um die Bewegung des Verriegelungselementes 10 mitzugestalten. Der komplementäre Konturnocken 205 kann dabei an einer Öffnung in die Aufnahme 203 des Gehäuses 202 für den Verriegelungsstempel 10 angeordnet sein.

Des Weiteren deuten die Figuren 2 bis 6 an, dass der Verriegelungsstempel 10 mithilfe einer Feder F1 in einer Verriegelungsstellung III gegenüber der Klappe 201 beaufschlagt ist. Die Feder F1 kann dabei in einem Druckstift aufgenommen werden.

Zudem zeigen die Figuren 2 bis 6, dass bei der Multifunktionseinheit 100 mindestens ein Sensorelement S1, bspw. in Form eines Schalters, vorgesehen sein kann, z. B. um die Entriegelungsstellung I des Verriegelungsstempels 10 gegenüber der Klappe 201 zu detektieren.

Außerdem zeigen die Figuren 2 bis 6, dass bei der Multifunktionseinheit 100 mindestens ein Sensorelement S2, bspw. in Form eines Schalters, vorgesehen sein kann, z. B. um die Verriegelungsstellung III des Verriegelungsstempels 10 gegenüber der Klappe 201 zu detektieren.

Die Figur 3 zeigt, dass der Verriegelungsstempel 10 in geöffneter Stellung der Klappe 201 ausgelenkt, sodass die Sperrnase 12 das Gegenrastelement 204 an der Klappe 201 freigibt. Die Klappe 201 kann ungehindert durch den Verriegelungsstempel 10 ausgefahren werden. Der Antriebnocken 24 ist dabei ganz rechts in tiefster Stellung der Antriebskulisse 11 eingefahren. Diese Stellung der Antriebskulisse 11 wurde oben als eine Parkbucht 11a für den Antriebsnocken 24 beschrieben, die dazu dienen kann, die Entriegelungsstellung I des Verriegelungsstempels 10 zu stabilisieren.

Wie es die Figuren 3 und 4 verdeutlichen, kann der Verriegelungsstempel 10 dazu ausgeführt sein, durch die Klappe 201 aus der Entriegelungsstellung I in die Schließstellung II überführt zu werden.

Die Figur 4 deuten mit dem Pfeil nach unten an, wie die Klappe 201 von oben auf den Verriegelungsstempel 10 drücken kann. Dadurch wird der Verriegelungsstempel 10 unter den Konturnocken 205 am Gehäuse 202 bewegt. Die Antriebseinheit ruht dabei. Der Rotationsantrieb wird nicht bewegt und verharrt in seiner Position. Die absolute Stellung des Rotationsantriebs bleibt also gleich, lediglich die relative Stellung des Antriebnockens 24 in der Antriebskulisse 11 verändert sich.

Wie es die Figur 5 verdeutlicht, kann die Antriebseinheit 20 dazu ausgeführt sein, durch eine Drehung eines Rotationsantriebes 22, 23 in eine erste Richtung R1 den Verriegelungsstempel 10 aus der Schließstellung II in die Verriegelungsstellung III zu überführen. Der Antriebsmotor 21 dreht den Antriebsnocken 24 gegen den Uhrzeigersinn (erste Richtung R1) auf einer Kreisbahn. Dadurch wird der Verriegelungsstempel 10 nach unten gezogen. Damit der Antriebsnocken 24 von der oberen Stellung in der Antriebskulisse 11 (vgl. Fig. 4) in die ganz linke Endstellung (vgl. Fig. 5) gelangen kann, wird die Sperrklinke 30 gegen die Federkraft der Feder F2 ausgelenkt. Die obere Feder F1 drückt den Verriegelungsstempel 10 wieder an die rechte Kontur des Gehäuses 202. Die Klappe 20 wird gefangen. Wenn der Verriegelungsstempel 10 gegen den Endanschlag bzw. Schalter fährt, kann der Antriebsmotor 21 abgeschaltet werden.

Ferner verdeutlicht die Figur 6, dass die Antriebseinheit 20 dazu ausgeführt sein kann, durch eine Drehung des Rotationsantriebes 22, 23 in eine zweite Richtung R2 den Verriegelungsstempel 10 aus der Verriegelungsstellung III in die Entriegelungsstellung I zu überführen. Der Antriebsmotor 21 dreht im Uhrzeigersinn (zweite Richtung R2) und stößt über die Sperrklinke 30 den Verriegelungsstempel 10 nach oben. Der Verriegelungsstempel 10 läuft entlang des Konturnockens 205 am Gehäuse 202 und gibt die Klappe 201 frei. Somit wird eine parallele Bewegung aus Aufwärts- und Auslenkbewegung generiert.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 200: Fahrzeug

- 210: Klappenanordnung

- 201: Klappe
- 202: Gehäuse
- 203: Aufnahme
- 204: Gegenrastelement
- 205: Konturnocken
- 207: funktionswesentliches Element
- 208: Steuereinheit

- 220: Betätigungseinheit
- 221: Antriebsmotor
- 222: Getriebe

- 100: Multifunktionseinheit

- 10: Verriegelungsstempel
- 11: Antriebskulisse
- 11a: Parkbucht
- 12: Sperrnase
- 13: Konturschulter

- 20: Antriebseinheit
- 21: Antriebsmotor
- 22, 23: Schneckengetriebe
- 22: Schneckenwelle
- 23: Schneckenrad
- 24: Antriebsnocken

- 30: Sperrklinke

- 40: Notentriegelungseinheit
- 41: Notentriegelungselement

- 1: Zuziehhilfe
- 2: Verriegelungsfunktion
- 3: Aufstoßhilfe

- I: Entriegelungsstellung
- II: Schließstellung
- III: Verriegelungsstellung

- D1: Drehachse
- D2: Drehachse
- F1: Feder
- F2: Feder
- L: Lager
- R1: erste Richtung
- R2: zweite Richtung
- S1: Sensorelement
- S2: Sensorelement

## Patentansprüche

1. Multifunktionseinheit (100) für eine Klappe (201), insbesondere eine Ladeklappe oder eine Tankklappe, eines Fahrzeuges (200), zum Bereitstellen einer Zuziehhilfe (1) mit einer Verriegelungsfunktion (2) und einer Aufstoßhilfe (3) an der Klappe (201),
aufweisend:
einen Verriegelungsstempel (10) zum Ziehen, zum Verriegeln und/oder zum Drücken an der Klappe (201), welcher in einer Aufnahme (203) an einem Gehäuse (202) für die Klappe (201) bewegbar anordbar ist, und
eine Antriebseinheit (20) zum Antreiben des Verriegelungsstempels (10) zum Ziehen, zum Verriegeln und/oder zum Drücken an der Klappe (201).

2. Multifunktionseinheit (100) nach Anspruch 1,
**dadurch gekennzeichnet,**
**dass** der Verriegelungsstempel (10) längsverschieblich und/oder schwenkbar, insbesondere kippbar, durch die Antriebseinheit (20) antreibbar ist,
und/oder dass der Verriegelungsstempel (10) zwischen einer Entriegelungsstellung (I), einer Schließstellung (II) und einer Verriegelungsstellung (III) gegenüber der Klappe (201) bewegbar ist.

3. Multifunktionseinheit (100) nach einem der vorhergehenden Ansprüche,
**dadurch gekennzeichnet,**
**dass** der Verriegelungsstempel (10) eine Antriebskulisse (11) aufweist,
und/oder dass der Verriegelungsstempel (10) lose, insbesondere ohne Lager, in der Aufnahme (203) am Gehäuse (202) aufgenommen ist.

4. Multifunktionseinheit (100) nach einem der vorhergehenden Ansprüche,
**dadurch gekennzeichnet,**
**dass** die Antriebskulisse (11) eine Parkbucht (11a) für einen Antriebsnocken (24) der Antriebseinheit (20), insbesondere in einer Entriegelungsstellung (I) des Verriegelungsstempels (10) gegenüber der Klappe (201) aufweist,
und/oder dass die Antriebskulisse (11) eine im Wesentlichen viereckige Form, vorzugsweise mit abgerundeten Ecken, aufweist.

5. Multifunktionseinheit (100) nach einem der vorhergehenden Ansprüche,
**dadurch gekennzeichnet,**
**dass** die Antriebseinheit (20) einen Rotationsantrieb aufweist,
und/oder dass die Antriebseinheit (20) einen, insbesondere ausschließlich einen Antriebsmotor (21), vorzugsweise einen Elektromotor, aufweist,
und/oder dass die Antriebseinheit (20) ein Schneckengetriebe (22, 23) aufweist,
und/oder dass die Antriebseinheit (20) eine schraubenförmige Schneckenwelle (22) und ein Schneckenrad (23) aufweist,
und/oder dass die Antriebseinheit (20) einen Antriebsnocken (24) aufweist,
wobei insbesondere der Antriebsnocken (24) drehfest mit dem Schneckenrad (23) verbunden ist,
wobei bevorzugt der Antriebsnocken (24) zum, insbesondere längsverschieblichen und/oder schwenkbaren, Antreiben des Verriegelungsstempels (10) ausgeführt ist,
wobei besonders bevorzugt der Antriebsnocken (24) mit einer Antriebskulisse (11) am Verriegelungsstempel (10) in einer mechanischen Wirkverbindung ist.

6. Multifunktionseinheit (100) nach einem der vorhergehenden Ansprüche,
**dadurch gekennzeichnet,**
**dass** eine Sperrklinke (30) vorgesehen ist, welche drehbar am Gehäuse (202) lagerbar ist, die dazu ausgeführt ist, die Antriebseinheit (20), insbesondere den Antriebsnocken (24), beim, insbesondere längsverschieblichen und/oder schwenkbaren, Antreiben des Verriegelungsstempels (10) zu unterstützen,
wobei insbesondere die Sperrklinke (30) federelastisch am Gehäuse (202) abgestützt ist, wobei vorzugsweise die Sperrklinke (30) dazu ausgeführt ist, den Verriegelungsstempel (10) in der Verriegelungsstellung (III) zu halten, insbesondere form- und/oder kraftschlüssig zu halten.

7. Multifunktionseinheit (100) nach einem der vorhergehenden Ansprüche,
**dadurch gekennzeichnet,**
**dass** eine Notentriegelungseinheit (40) für den Verriegelungsstempel (10) vorgesehen ist, um den Verriegelungsstempel (10) zum Entriegeln der Klappe (201) anzutreiben.

8. Multifunktionseinheit (100) nach einem der vorhergehenden Ansprüche,
**dadurch gekennzeichnet,**
**dass** der Verriegelungsstempel (10) eine Sperrnase (12) aufweist, die dazu ausgeführt ist, mit einem komplementären Gegenrastelement (204) an der Klappe (201) zusammenzuwirken, um die Klappe (201) zuzuziehen und/oder zu verriegeln.

9. Multifunktionseinheit (100) nach einem der vorhergehenden Ansprüche,
**dadurch gekennzeichnet,**
**dass** der Verriegelungsstempel (10) eine Konturschulter (13) aufweist, die dazu ausgeführt ist, mit einem komplementären Konturnocken (205) am Gehäuse (202) zusammenzuwirken, um den Verriegelungsstempel (10) bei einer Bewegung zum Ziehen und/oder zum Drücken an der Klappe (201) zu führen.

10. Multifunktionseinheit (100) nach einem der vorhergehenden Ansprüche,
**dadurch gekennzeichnet,**
**dass** der Verriegelungsstempel (10) federelastisch in eine Verriegelungsstellung (III) gegenüber der Klappe (201) beaufschlagt ist, insbesondere durch einen federelastisch vorgespannten Druckstift.

11. Multifunktionseinheit (100) nach einem der vorhergehenden Ansprüche,
**dadurch gekennzeichnet,**
**dass** mindestens ein Sensorelement (S1), insbesondere in Form eines Schalters, vorgesehen ist, um eine Verriegelungsstellung (III) oder eine Entriegelungsstellung (I) des Verriegelungsstempels (10) gegenüber der Klappe (201) zu detektieren, und/oder dass mindestens ein Sensorelement (S2), insbesondere in Form eines Schalters, vorgesehen ist, um eine Verriegelungsstellung (III) des Verriegelungsstempels (10) gegenüber der Klappe (201) zu detektieren.

12. Multifunktionseinheit (100) nach einem der vorhergehenden Ansprüche,
**dadurch gekennzeichnet,**
**dass** der Verriegelungsstempel (10) dazu ausgeführt ist, durch die Klappe (201) aus einer Entriegelungsstellung (I) in eine Schließstellung (II) überführt zu werden.

13. Multifunktionseinheit (100) nach einem der vorhergehenden Ansprüche,
**dadurch gekennzeichnet,**
**dass** die Antriebseinheit (20) dazu ausgeführt ist, durch eine Drehung eines Rotationsantriebes in eine erste Richtung (R1) den Verriegelungsstempel (10) aus einer Schließstellung (II) in eine Verriegelungsstellung (III) zu überführen,
und/oder dass die Antriebseinheit (20) dazu ausgeführt ist, durch eine Drehung eines Rotationsantriebes in eine zweite Richtung (R2) den Verriegelungsstempel (10) aus einer Verriegelungsstellung (III) in eine Entriegelungsstellung (I) zu überführen.

14. Klappenanordnung (210) mit
einer Klappe (201), insbesondere eine Ladeklappe oder eine Tankklappe, zum Verschließen eines funktionswesentlichen Elementes (207), insbesondere einer Ladesteckdose oder eines Kraftstoffeinfüllrohres, eines Fahrzeuges (200), die bewegbar, insbesondere schwenkbar, an einem Gehäuse (202) gelagert ist,
dem Gehäuse (202) zum Lagern der Klappe (201),
einer Betätigungseinheit (220) zum Betätigen der Klappe (201), und
einer Multifunktionseinheit (100) zum Bereitstellen einer Zuziehhilfe (1) mit einer Verriegelungsfunktion (2) und einer Aufstoßhilfe (3) an der Klappe (201) nach einem der vorhergehenden Ansprüche.

15. Verfahren zum Betätigen einer Multifunktionseinheit (100) nach einem der vorhergehenden Ansprüche, aufweisend:
- Schließen der Klappe (201), um den Verriegelungsstempel (10) aus einer Entriegelungsstellung (I) in eine Schließstellung (II) zu überführen,
- Betätigen der Antriebseinheit (20) in eine erste Richtung (R1), um den Verriegelungsstempel (10) aus einer Schließstellung (II) in eine Verriegelungsstellung (III) zu überführen,
- Betätigen der Antriebseinheit (20) in eine zweite Richtung (R2), um den Verriegelungsstempel (10) aus einer Verriegelungsstellung (III) in eine Entriegelungsstellung (I) zu überführen.
